# FASCICULE DE BREVET EUROPEEN

(11) **EP 0 460 543 B1**
(45) Date de publication et mention de la délivrance du brevet: **10.08.1994**
(21) Numéro de dépôt: 91108927.4
(22) Date de dépôt: 31.05.1991
(51) Int. Cl.: A61C 5/02, B21D 7/06

(54) **Appareil à cintrer les instruments à canaux pour l'art dentaire**
Krümmungsgerät für Zahnwurzelkanalhandwerkzeug
Bending device for root canal dental tools

(30) Priorité: 08.06.1990 CH 1931/90
(43) Date de publication de la demande: 11.12.1991
(73) Titulaire: MAILLEFER INSTRUMENTS S.A., CH-1338 Ballaigues (CH)
(72) Inventeur: Randin, Jean-Claude, CH-1338 Ballaigues (CH)
(74) Mandataire: Robert, Jean S.

(56) Documents cités:
- DE-U- 8 906 435
- FR-A- 2 624 722
- GB-A- 238 164

## Description

La présente invention a pour objet un appareil à cintrer les instruments à canaux pour l'art dentaire, comprenant deux chevilles juxtaposées entre lesquelles l'instrument à cintrer est destiné à être engagé de telle manière que, en retirant l'instrument tout en lui imprimant un déplacement latéral, on lui confère une forme cintrée correspondant à la forme du canal dentaire à traiter.

De tels appareils sont connus en soi, l'un d'eux étant décrit et représenté dans la demande de brevet FR-A- 2 624 722.

Ces appareils ont pour but de permettre de cintrer les instruments à canaux pour l'art dentaire tels que limes, broches ou autres, dont le diamètre est de l'ordre de quelques dixièmes de mm, qui sont livrés aux praticiens à l'état rectiligne et conviennent, tels, au traitement des canaux radiculaires également rectilignes.

Le cintrage est utile lorsqu'il s'agit de traiter des canaux radiculaires courbes, ce qui est fréquemment le cas, l'introduction, dans un tel canal, de l'instrument rectiligne pouvant présenter des difficultés, malgré la flexibilité de l'instrument due à la finesse de sa tige. C'est la raison pour laquelle les praticiens tentent alors de précintrer l'instrument à l'aide de brucelles, moyen peu adapté qui conduit le plus souvent à produire, sur la tige de l'instrument, un coude plutôt qu'un arrondi, ce qui ne facilite aucunement l'emploi de l'instrument, bien au contraire.

Le but de la présente invention est de fournir une solution au cintrage des instruments à canaux pour l'art dentaire.

Ce but est atteint grâce aux moyens définis dans la revendication 1.

Le dessin représente, à titre d'exemple, une forme d'exécution de l'objet de l'invention.

La fig. 1 est une vue en élévation d'un appareil à cintrer les instruments à canaux pour l'art dentaire.

La fig. 2 en est une vue en bout.

La fig. 3 est également une vue en bout de l'appareil, représenté dans une position différente de celle de la fig. 2.

La fig. 4 est une coupe suivant la ligne IV-IV de la fig. 1, à échelle agrandie.

La fig. 5 est une coupe suivant la ligne V-V de la fig. 2, également à échelle agrandie, et

La fig. 6 est une vue en élévation d'une lime de traitement des racines dentaires cintrée au moyen de l'appareil des figs. 1 à 5.

L'appareil représenté comprend deux manchons 1 et 2, en matière plastique, montés rotativement sur deux tourillons 3 et 4, respectivement. Le tourillon 3 est vissé sur un élément fixe de support 5, de forme allongée, sensiblement parallélépipédique, formant manche. Cet élément fixe de support 5 présente, ouvrant sur une de ses faces latérales, désignée par 6, une creusure 7 de section rectangulaire.

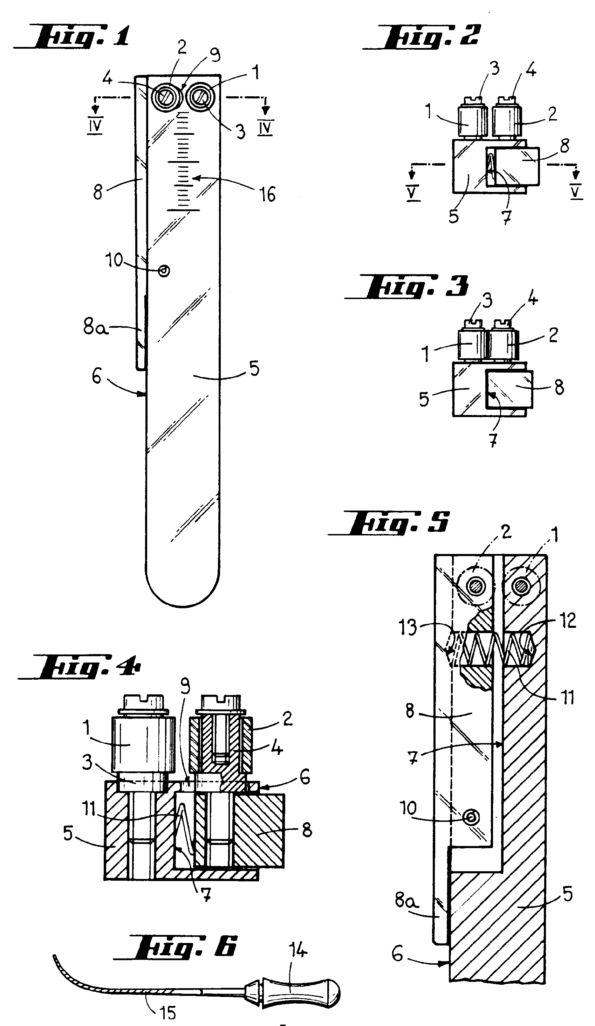

Le tourillon 4 est vissé sur une pièce mobile de support 8 de forme allongée, de section rectangulaire, engagée dans la creusure 7 de l'élément fixe de support 5; ce tourillon traverse une ouverture allongée 9 (figs 1 et 4) ménagée dans l'élément 5. La pièce mobile 8 est articulée sur l'élément 5 à l'aide d'une cheville 10. Un ressort à boudin 11 est engagé par une de ses extrémités dans un trou 12 ménagé dans le fond de la creusure 7 de l'élément fixe de support 5 et par son autre extrémité dans un trou 13 pratiqué dans la pièce mobile 8. Ce ressort tend à maintenir la pièce 8 dans sa position dans laquelle les manchons 1 et 2 sont séparés l'un de l'autre (figs. 1, 2, 4 et 5). Dans cette position, un prolongement 8a que présente la pièce 8, qui s'étend au-delà de son point d'articulation 10, le long de la face latérale 6 de l'élément 5, prend appui contre cette dernière.

L'appareil décrit et représenté s'utilise de la façon suivante :

L'instrument à canaux pour l'art dentaire pourra, par exemple, être une lime telle que celle représentée à la fig. 6, comprenant un manche 14 dans lequel est enchâssée une tige 15, constituant la lame de l'instrument, qui présente une partie lisse à sa naissance et une partie coupante, active, à son extrémité. Le cintrage de cet instrument s'effectue en saisissant d'une main, par exemple de la main gauche, l'élément 5 formant manche, le pouce étant appliqué sur la pièce mobile 8. L'appareil ainsi tenu, le praticien engage la lame 15 de l'instrument qu'il tient de l'autre main entre les manchons 1 et 2, ce qui se fait aisément puisque ces manchons sont alors écartés l'un de l'autre. Il exerce ensuite du pouce de la main gauche une pression sur la pièce mobile 8 de l'appareil, laquelle pièce mobile agit comme un levier du 3ème genre, jusqu'à ce que la lame 15 de l'instrument soit pincée entre les deux manchons 1 et 2. Il retire alors l'instrument, non pas longitudinalement, ce qui n'aurait pas d'effet de cintrage, mais en le déplaçant latéralement, ce qui plie ou cintre l'extrémité de la lame 15, comme le montre la fig. 6. L'instrument ainsi cintré pourra être aisément engagé dans un canal radiculaire courbe.

Afin de permettre au praticien de ne courber qu'une certaine longueur de la lame de l'instrument, mesurée à partir de la pointe de ce dernier, l'élément 5 porte une graduation indiquée en 16 à la fig. 1, qui permet de mesurer la longueur de la tige de l'instrument située au-delà du point de contact de cette dernière avec les manchons 1 et 2.

## Revendications

1. Appareil à cintrer les instruments à canaux pour l'art dentaire, comprenant deux chevilles juxtaposées entre lesquelles l'instrument à cintrer est destiné à être engagé de telle manière que, en retirant l'instrument tout en lui imprimant un déplacement latéral, on lui confère une forme cintrée correspondant à la forme du canal dentaire à traiter, caractérisé par le fait que lesdites chevilles (1, 2) sont mobiles l'une par rapport à l'autre, des moyens (8) permettant de les rapprocher l'une de l'autre à l'encontre de l'action d'un dispositif élastique de rappel (11) tendant à les écarter l'une de l'autre, le tout de manière qu'une fois l'instrument à cintrer engagé entre lesdites chevilles, en rapprochant ces dernières l'une de l'autre, on puisse pincer l'instrument entre lesdites chevilles.

2. Appareil suivant la revendication 1, caractérisé par le fait que lesdites chevilles sont constituées par des manchons cylindriques (1, 2) montés chacun rotativement sur un tourillon fixe (34).

3. Appareil suivant la revendication 2, caractérisé par le fait que lesdits manchons (1, 2) sont en matière plastique.

4. Appareil suivant la revendication 1, caractérisé par le fait que l'une (1) desdites chevilles (1, 2) est montée sur un élément fixe de support (5), l'autre (2) étant portée par une pièce (8) montée elle-même de façon mobile sur ledit élément fixe (5).

5. Appareil suivant la revendication 4, caractérisé par le fait que l'élément fixe de support (5) est constitué par une pièce allongée formant manche, présentant une creusure (7) dans laquelle est partiellement engagée la pièce de support (8) de la deuxième cheville (2), ladite pièce (8) étant en outre articulée sur l'élément fixe (5), le tout de manière qu'en saisissant ce dernier dans la main, on puisse, en agissant du pouce sur la pièce mobile (8), presser cette dernière en direction du fond de la creusure (7), ce qui tend à approcher la cheville (2) qu'elle porte de la cheville (1) portée par l'élément fixe du support (5).

6. Appareil suivant la revendication 5, caractérisé par le fait qu'un ressort (11) est interposé entre l'élément fixe de support (5) et ladite pièce mobile (8), tendant à amener cette dernière dans la position dans laquelle lesdites chevilles (1, 2) sont séparées l'une de l'autre, des moyens de butée (8a) que présente la pièce mobile (8) étant alors en appui contre l'élément fixe (5).

7. Appareil suivant la revendication 6, caractérisé par le fait que la pièce mobile (8) présente un prolongement (8a) s'étendant au-delà de son point d'articulation (10), situé au voisinage d'une de ses extrémités, à l'extérieur de ladite creusure (7), et qui prend appui contre la face latérale (6) de l'élément fixe de support (5).

8. Appareil suivant la revendication 4, caractérisé par le fait que l'élément fixe de support (5) présente une graduation (16) permettant de déterminer la longueur de la partie de la lame de l'instrument située au-delà des chevilles (1, 2).

## Patentansprüche

1. Krümmungsgerät für Zahnwurzelkanal-Handwerkzeug, das zwei nebeneinander angeordnete Bolzen aufweist, zwischen die das zu krümmende Werkzeug derart eingeführt wird, daß man beim Herausziehen des Werkzeugs bei gleichzeitiger seitlicher Verschiebung diesem eine gekrümmte Form gibt, die der Form des zu behandelnden Zahnwurzelkanals entspricht, dadurch gekennzeichnet, daß die genannten Bolzen (1, 2) gegeneinander beweglich sind, wobei die Bolzen mit Mitteln (8), entgegen der Federwirkung einer Rückholvorrichtung (11), die bestrebt ist, diese auseinander zu halten, derart zusammengedrückt werden können, daß das zu krümmende Werkzeug, nachdem es zwischen die Bolzen gelegt und diese zusammengedrückt wurden, von den beiden Bolzen eingeklemmt werden kann.

2. Gerät nach Anspruch 1, dadurch gekennzeichnet, daß die genannten Bolzen aus zylindrischen Hülsen (1, 2) bestehen, die jeweils drehbar auf einem unbeweglichen Zapfen (3, 4) gelagert sind.

3. Gerät nach Anspruch 2, dadurch gekennzeichnet, daß die genannten Hülsen (1, 2) aus Kunststoff bestehen.

4. Gerät nach Anspruch 1, dadurch gekennzeichnet, daß einer (1) der beiden Bolzen (1, 2) an einem unbeweglichen Halteelement (5) und der andere (2) an einem Stück (8) befestigt ist, das seinerseits beweglich am genannten unbeweglichen Element (5) angebracht ist.

5. Gerät nach Anspruch 4, dadurch gekennzeichnet, daß das unbewegliche Halteelement (5) aus einem länglichen Teil besteht, das einen Griff bildet und einen Hohlraum (7) aufweist, in den das Haltestück (8) des zweiten Bolzens (2) teilweise eingreift, wobei das Stück (8) außerdem gelenkig am unbeweglichen Element (5) angebracht ist, so daß man, wenn man das unbewegliche Element in der Hand hält, mit dem Daumen auf das bewegliche Stück (8) drücken und dieses in Richtung der hinteren Fläche des Hohlraum (7) schieben kann, wodurch der an diesem Stück angebrachte Bolzen (2) hin zu dem am unbeweglichen Halteelement (5) angebrachten Bolzen (1) bewegt wird.

6. Gerät nach Anspruch 5, dadurch gekennzeichnet, daß eine Feder (11) zwischen dem unbeweglichen Halteelement (5) und dem genannten beweglichen Stück (8) angeordnet ist, die bestrebt ist, dieses Stück in eine Stellung zu bringen, bei der die genannten Bolzen (1, 2) auseinander gerückt sind, wobei Anschlagelemente (8a), mit denen das bewegliche Stück (8) versehen ist, sich am unbeweglichen Element (5) abstützen.

7. Gerät nach Anspruch 6, dadurch gekennzeichnet, daß das bewegliche Stück (8) eine Verlängerung (8a) aufweist, die über seinen in der Nähe eines seiner Enden befindlichen Gelenkpunkt (10) hinausreicht und außerhalb des Hohlraum (7) liegt und sich an der Seitenfläche (6) des unbeweglichen Halteelements (5) abstützt.

8. Gerät nach Anspruch 4, dadurch gekennzeichnet, daß das unbewegliche Halteelement (5) mit einer Stricheinteilung (16) versehen ist, mit deren Hilfe sich die Länge des Teils der Werkzeugklinge bestimmen läßt, welche jenseits der Bolzen (1, 2) liegt.

## Claims

1. Apparatus for bending dental instruments for use in root canals comprising two juxtaposed stems between which the instrument to be bent is engaged in such a way that while withdrawing the instrument and imparting thereto a lateral displacement, one imparts thereto a curved shape corresponding to the shape of the root canal to be treated, characterized by the fact that the said stems (1, 2) are movable with respect to each other, means (8) permitting to approach them to each other against the action of an elastic return device (11) urging them to be separated from each other, the whole in such a way that, once the instrument to be bent is engaged between the said stems, while approaching them to each other, one can pinch the instrument between the said stems.

2. Apparatus as claimed in claim 1, characterized by the fact that the said stems are constituted by cylindrical sleeves (1, 2) each rotatably mounted on a stationary journal (3, 4).

3. Apparatus as claimed in claim 2, characterized by the fact that the said sleeves (1, 2) are made of plastic material.

4. Apparatus as claimed in claim 1, characterized by the fact that one (1) of the said stems (1, 2) is mounted on a stationary supporting element (5), the other one (2) being carried by a member (8) movably mounted on the said stationary element (5).

5. Apparatus as claimed in claim 4, characterized by the fact that the stationary supporting element (5) is constituted by an elongated member constituting a handle, provided with a recess (7) in which is partially engaged the supporting member (8) of the second stem (2), the said member (8) being moreover articulated on the stationary element (5), the whole in such a way that while gripping the latter in hand, one can, while acting with a thumb on the movable member (8), press the latter in the direction of the bottom of the recess (7), that urges to approach the stem (2) it carries to the stem (1) carried by the stationary supporting element (5).

6. Apparatus as claimed in claim 5, characterized by the fact that a spring (11) is interposed between the stationary supporting element (5) and the said movable member (8), urging to bring the latter into the position in which the said stems (1, 2) are separated one from each other, abutting means (8a) presented by the movable member (8) then bearing against the stationary element (5).

7. Apparatus as claimed in claim 6, characterized by the fact that the movable member (8) is provided with a prolongation (8a) extending beyond its articulation point (10), situated in the neighbourhood of one of its ends, out from the said recess (7), and which bears on the lateral face (6) of the stationary supporting element (5).

8. Apparatus as claimed in claim 4, characterized by the fact that the stationary supporting element (5) is provided with a graduation (16) permitting to determine the length of the portion of the blade of the instrument situated beyond the said stems (1, 2).
